# EUROPEAN PATENT SPECIFICATION

(11) **EP 4 220 459 B1**
(45) Date of publication and mention of the grant of the patent: **06.05.2026**
(21) Application number: 23158648.8
(22) Date of filing: 10.11.2016
(51) Int. Cl.: G06F 21/53, G06F 21/60, H04L 9/06, H04L 9/08, H04L 9/32, G06F 21/62, H04L 9/40

(54) **BALANCING PUBLIC AND PERSONAL SECURITY NEEDS**
AUSGLEICHEN VON ÖFFENTLICHEN UND PERSÖNLICHEN SICHERHEITSBEDÜRFNISSEN
ÉQUILIBRAGE DE BESOINS DE SÉCURITÉ PUBLICS ET PERSONNELS

(43) Date of publication of application: 02.08.2023
(62) Divisional of application: 16921033.3
(73) Proprietor: Brickell Cryptology LLC, Hillsboro OR 97124 (US)
(72) Inventor: BRICKELL, Ernest, Hillsboro, Oregon 97124 (US)
(74) Representative: Käck, Stefan

(56) References cited:
- WO-A1-98/27502
- US-A1- 2004 015 724
- US-A1- 2007 271 592

## Description

### Technical Field

The present invention relates generally to computer security for individuals and corporations, and the often competing requirements of law enforcement to sometimes request access to personal information stored on computers.

### Background Art

There is prior art disclosing the design and implementation of partitions in a computing device. One example is an Operating System that creates separate partitions for different users, and separate partitions for different applications used by one user. Virtualization is a second example of a technique used to create partitions. A virtual machine monitor creates separate partitions that can each execute a separate operating system such that applications executing in one virtual machine cannot access applications executing in another virtual machine. Virtual machines can be configured so that different users have access to different virtual machines, thus protecting a user of one virtual machine from accessing data of another user using a different virtual machine. There are numerous applications of virtualization for adding security to a computing device, such as US published patent application 2014/317667 to Vaidya et al and US patent 8,756,696 to Miller where virtual machines are used deploy endpoint security services such as isolating software that may contain malware from other virtual machines on the system.

A third example of a technique used to create partitions consists of two separate microprocessors, each executing different software, with hardware to separate resources as required by the device. This third example is the case with Intel devices containing the Intel Management Engine (ME, later renamed Converged Security Manageability Engine), which is a separate microprocessor from the main microprocessor. The ME can get input from the user and produce a display that cannot be viewed by any software executing on the main microprocessor. A fourth example of a technique used to create partitions is illustrated by the ARM TrustZone technology, which provides for a normal OS and a secure OS to execute on the same processor, with the property that the execution in the secure OS is protected from the normal OS. ARM has also implemented trusted input and display capabilities for Trust Zone, as described in Trusted Execution Environment documents. A fifth example of a technique used to create partitions is the Intel Software Guard Extensions (SGX). SGX provides an enclave to execute an application protected from all other software and firmware on the device. U.S. published patent application 20150086012 describes a method to add protected display to SGX and U.S. published patent application 20140359305 describes a method to add protected input to SGX. SGX provides a method for providing an application specific protected key to partitioned application that is dependent upon the security version number of firmware launched at boot. This provides more security for applications than other methods for producing a key based on firmware that is not application specific, such as US published patent application 2006/0005046 to Hars. Thus, there are five different approaches that provide for partitions for executing software that is protected from other software on the system, and provide secure input, output, and storage to the protected partition. However, none of these approaches meet all the requirements laid out in this invention. In particular, they do not provide for a computing device to require authorized access by law enforcement, while allowing the user to launch only approved applications that cannot be accessed by law enforcement.

There is prior art, for example US published patent application 2004/0015724, disclosing a system available to remote users who login to the system to get access to data on the system. In this system, there are administrators of the system that have the capability to determine which users are allowed access to the system, and what data and resources on the system are available to each user, and in addition to add or delete administrators of the system. Such a system would not be useful for providing authorized access by law enforcement, since an administrator of the system could simply turn off the access of law enforcement.

There is prior art, for example US published patent application 2007/0271592, disclosing a system for managing access to documents, in which a log is kept of the access requests to the system, and also requires a user logon and password to provide access to the log. However, there is no prior art disclosing a system in which law enforcement is allowed authorized access to a device that cannot be blocked by any user of the device, and for which there is a log kept of any access made by law enforcement for which the user can access at some future time that is set by law enforcement.

There is prior art disclosing the design and implementation of key escrow systems, wherein a key escrow agent is provided with cryptographic keys that can be used to decrypt communications from a device.

### Disclosure of Invention

The invention is defined in the independent claims. Particular embodiments are set out in the dependent claims.

In particular, a computing device is disclosed. The computing device is operated by a user of the computing device.

The computing device comprises: an access control module configured to verify a digital signature, using an access verification key, on a request to execute an authorized external access payload on the computing device by an authorized external access entity, where the authorized external access entity is a different entity than the user and is external to the computing device; the access control module further configured to store information regarding the authorized external access payload; an output module executing on the computer device and configured to provide access to the stored information regarding the authorized external access payload; an authorized access unlock module configured to use information in the authorized external access payload to unlock the computer device when the computing device is in a locked state; the authorized external access payload configured to enable the authorized external access entity to access data in the computing device, even when the computing device is in a locked state when the authorized external access payload is received.

### Brief Description of the Drawings

These and other more detailed and specific objects and features of the present invention are more fully disclosed in the following specification, reference being had to the accompanying drawings, in which:
Figure 1 is an illustration of a computing device **1** that can be used in conjunction with the present application.
Figure 2 is an illustration of a computing device **1** which incorporates a malware protected partition **210.**
Figure 3 is an illustration of a computing device **1** which incorporates a malware protected partition **210,** and in addition incorporates an access protected partition **310** and an access control module **330.**
Figure 4 is an illustration of more detail of some of the modules **240, 250, 310, 450, 207** in the illustration in Figure 3.
Figure 5 is an illustration of a computing device **500** which is used by an external party for securely storing and using private keys **514, 516** which are used for external access.
Figure 6 is an illustration of more detail of the access protected application **512** illustrated in Figure 5.
Figure 7 is an illustration of a protocol used to transfer private keys **514, 516** from one external access party device **500** to another **700.**
Figure 8 is an illustration of a method used to audit the use of a cryptographic key **814.**
Figure 9 is an illustration of a computing device **1** wherein the main partition **205** and the malware protection partition **210** use cryptographic modules **904, 914** which have key escrow capabilities.

### Detailed Description of Preferred Embodiments

The purpose of this invention is to present a balance between the needs of law enforcement to gain access to devices when given a court order or other legitimate authority, and the needs of individuals and corporations to protect their security from accidental or intentional misuse of the access provided to law enforcement. The invention presented provides the user of a device a partition (310) in the device to execute applications for which the user can conduct financial transactions, handle sensitive corporate information, or other approved security uses. Law enforcement is never given access to this partition. There is another partition (205) in which the user can execute any software. In this second partition (205), law enforcement can get access through use of a system that assures that any access that law enforcement obtains is recorded in a secure audit record.

### Definitions

The following terms have the following meanings throughout the remainder of the present specification, including claims.

"Trusted Computing Base" of a protected partition is the set of firmware and software that is critical to the security of the protected partition.

"Protected Data" of a protected application in a protected partition is any data which the application chooses to keep private from access from outside the protected partition, and also any data or software used by the application for which the application wants assurance that the data or software is not modified without detection of such modification.

An "external entity" is an entity other than a "user" of the device. Both an "Authorized External Access Entity" and an "Access Protected Protected Approval Entity" are external entities.

### Preferred Embodiments

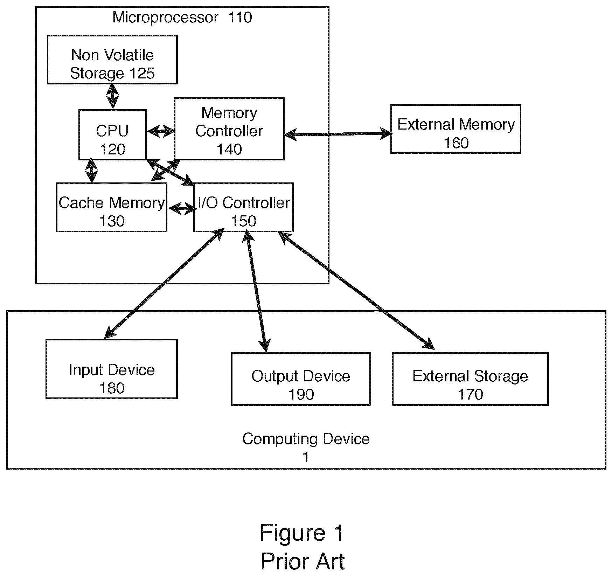

Figure 1 illustrates a system according to some embodiments. Computing device 1 may be a hand held smart phone, a tablet, a laptop, a desktop, or a server. The computing device **1** has one or more microprocessors. Each microprocessor may comprise a CPU **120** to carry out the basic instructions of a computer program, cache memory **130** to store instructions and data inside the microprocessor, a memory controller **140** to access memory **160** that is external to the microprocessor **110** and an I/O Controller **150** to access other resources on the device, such as external non-volatile storage **170,** input devices **180,** and output devices **190.** In some embodiments of the system, there are multiple microprocessors **110** in the device. In some embodiments of the system, some of the microprocessors **110** serve specific purposes, such as a graphics microprocessor **110.**

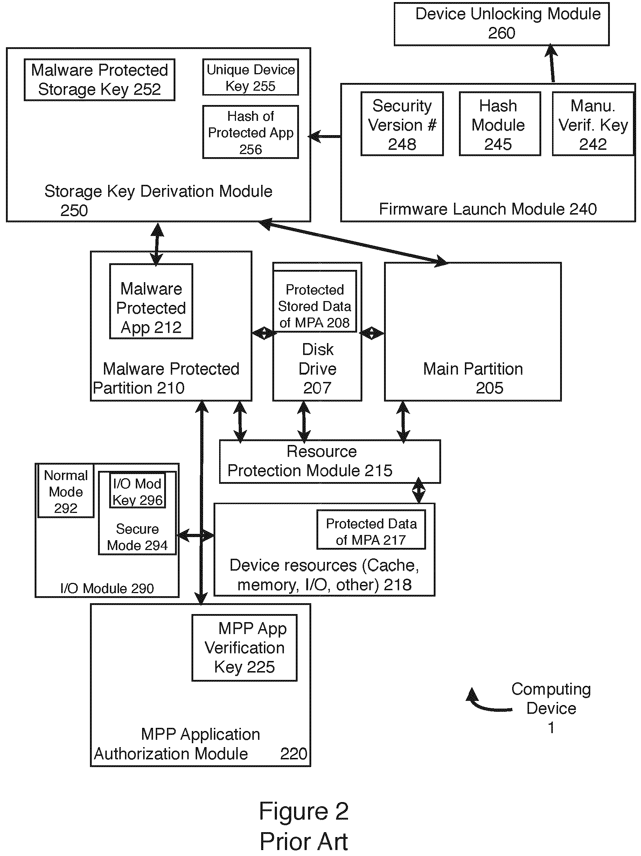

Figure 2 illustrates an embodiment of the system, in which the computing device **1** includes a Main Partition **205,** which executes much of the functionality of the system. In some embodiments, there is a Malware Protected Partition **210** for executing applications **212,** using resources **217** and storing data **208** with protection from any malware that has infected the main partition **205.** In some embodiments, there are multiple Malware Protected Partitions **210** with each having protection from malware that has infected the Main Partition **205** and other Malware Protected Partitions **210.**

In some embodiments, during the manufacturing of the device **1,** a Unique Device Key **255** is generated randomly and stored in nonvolatile storage **125** within the device **1.** An Application Verification Key **225** is provided to the device **1** manufacturer and also placed in nonvolatile storage **125** within the device **1.**

Within the device, there are two partitions for executing applications, a Main Partition **205** and a Malware Protected Partition **210.** The two partitions **205, 210** share some device **1** resources **218,** which may include access to common input devices **180,** output to common display devices **190,** and system memory **125, 130, 160, 170.** There is a Resource Protection Module **215** that allows applications **212** in the Malware Protected Partition **210** to use data **217** (Protected Data of Malware Protected Application **212)** from device **1** resources that cannot be viewed or modified by any software in the Main Partition **205,** and allows applications in the Malware Protected Partition **210** to execute instructions that cannot be modified by any software in the Main Partition **205.**

In some embodiments, there may be two microprocessors **110** on the device **1,** wherein the main partition **205** may include all of the applications that execute on one microprocessor **110,** and the malware protected partition **210** may include all of the applications that execute on another microprocessor. In another embodiment, the main partition **205** may comprise a normal OS and all of the applications running on that OS, and the Malware Protected Partition **210** may comprise a secure OS and all of the applications running on that OS. In another case, the Malware Protected Partition **210** may be just a set of software, and the Main Partition **205** may be all other software in the system. The design of the Resource Protection Module **215** is different in these three embodiments, and may be implemented as a set of modules in different portions of the device **1.**

The Firmware Launch Module **240** handles the launching of firmware on the microprocessor **110** that executes the application in the malware protected partition **210,** and is in the trusted computing base of the protected partition **210.** In some embodiments, there is a Manufacturers Verification Key **242** which is accessible to the Firmware Launch Module **240.** The Manufacturers Verification Key **242** is the public portion of a public/private pair of keys, the private key in the pair being a Manufacturers Signature Key which the manufacturer securely maintains in their facility and uses for digitally signing firmware. In some embodiments, the firmware that is signed has a Security Version Number **248** which is assigned by the manufacturer. The Hash Module **245** computes a cryptographic hash of the firmware. The Security Version Number **248** is passed to the Storage Key Derivation Module **250.** The Storage Key Derivation Module **250** computes a Malware Protected Storage Key **252** as the output of a Pseudo Random Function, with input including the Security Version Number **248** of the Firmware and the Unique Device Key **255.** In some embodiments, a cryptographic hash **256** of an application **212** in the Malware Protected Partition **210** is computed by the Storage Key Derivation Module **250** for use as an additional input into the Pseudo Random Function for computing the Malware Protected Storage Key **252.** In some embodiments, this storage key **252** is used by the application **212** in the Malware protected partition **210** for encrypting data for storing in permanent storage **208,** such as a disk drive **207.** In some embodiments, there are multiple firmware and software segments in the trusted computing base of the Malware Protected Partition **210** that are verified. In some embodiments, the Security Version Numbers **248** of multiple firmware and software segments are provided to the Storage Key Derivation Module **250** for use as input to a Pseudo Random Function for producing the Malware Protected Storage Key **252.** In some embodiments, the Hashes of multiple firmware and software segments used in Device **1** for providing protection for a Malware Protected App **212,** and Protected Data **208, 217** of a Malware Protected App **212** are provided to the Storage Key Derivation Module **250** for use as input to a Pseudo Random Function for producing the Malware Protected Storage Key **252.**

In some embodiments, a Malware Protected Application **212** in Malware Protected Partition **210** has data that it wants to keep secret from the Main Partition **205,** and for which it wants assurance that it can detect any modification to that data. In some embodiments, this is accomplished by having the Malware Protected Application **212** use the Malware Protected Storage Key **252** to cryptographically protect the data secrecy and integrity when the data is stored in Protected Stored Data of Malware Protected App **208** in the Disk Drive **207.**

The embodiments described in Figures 1 and 2 allow the Malware Protected Application **212** to have Malware Protected Data **208, 217** kept from the Main Partition **205,** that is data which the Malware Protected Application **212** keeps private from access from the Main Partition **205,** and also data and software used by the Malware Protected Application **212** with assurance that the data and software are not modified without detection.

In some embodiments, the Device **1** manufacturer inserts a Malware Protected Partition App Verification Key **225** into the Device **1** during manufacturing. This Key **225** is used for approving the applications **212** that can execute in the Malware Protected Partition **210.** In some embodiments, software launched in the Malware Protected Partition **210** may require an approval from the MPP Application Authorization Module **220.** In some embodiments, a Malware Protected Application **212** to launch in the Malware Protected Partition **210** and a digital signature are loaded into memory **130, 160.** The MPP Application Authorization Module **220** checks whether the digital signature is valid using the MPP Application Verification Key **225.** The Malware Protected Application **212** is allowed to execute in the malware protected partition **210** only if it passes this signature verification check.

In some embodiments, the Resource Protection Module **215** provides protection for input and output for a Malware Protected App **212,** so that input from a user is provided to the Malware Protected App **212** in a way that prevents access from any software in the Main Partition **205,** and display to a screen is provided to the Malware Protected App **212** in a way that prevents access from any software in the Main Partition **205.** In some embodiments, the I/O Module **290** for input or output has a normal mode **292** and a secure mode **294.** In the normal mode **292,** the I/O module is used by any partition **205, 210** on the platform 1. The secure mode **294** is used by a Malware Protected App **212** for protected I/O. In some embodiments, the Resource Protection Module **215** keeps data **217** transferred between the Malware Protected App **212** and the secure mode **294** of the I/O module **290** from being accessed by any software in the Main Partition **205.** In some embodiments, a cryptographic key exchange is performed between a secure mode **294** of I/O module **290** and Malware Protected App **212,** and cryptography is used to protect data **217** of the Malware Protected App **212** from being transferred between the Malware Protected App **212** and the secure mode **294** of the I/O Module **290.** In some embodiments, this cryptographic key exchange uses a Public/Private Key pair, I/O Mod Keys **296** in the Secure Mode **294** of I/O Module **290,** and a Public/Private Key pair created and used by a Malware Protected App **212.**

There are existing computer architectures that meet the embodiments described in Figures 1 and 2. The Intel Manageability Engine (also called the Converged Security and Manageability Engine) is an embodiment of Figures 1 and 2 in which the Main Partition **205** is executed on one microprocessor **110** and the Malware Protected Partition **210** is executed on a different microprocessor **110.** The ARM implementation of the Trusted Execution Environment specification using ARM Trust Zone is an embodiment of Figures 1 and 2 in which the Main Partition **205** and the Malware Protected Partition **210** are two different modes (called Normal Mode and Secure Mode) that execute different operating systems on the same microprocessor **110.** Some implementations of ARM Trust Zone may not have the functionality of the Firmware Launch Module **240** and the Storage Key Derivation Module **250.** The Intel Software Guard Extensions is an embodiment in which there are multiple Malware Protected Partitions **210** executing individual Malware Protected Applications **212,** using the same operating systems and processors as the Main Partition **205.**

One reason that the embodiment in Figures 1 and 2 does not meet the requirements for the device **1** in the invention described in this patent application is that the device **1** manufacturer could release a version of the trusted computing base of the Malware Protected Partition **210** that would reduce the security barriers between the Main Partition **205** and the Malware Protected Partition **210,** and give this version the same Security Version Number **248** as the previous version, so that the Malware Protected Storage Key **252** would be the same with these two different versions of the firmware.

Another reason that the embodiment in Figures 1 and 2 does not meet the requirements for the device **1** in the invention described in this application is that the manufacturer is the entity that approves Malware Protected Applications **212** for execution in the Malware Protected Partition **210.** There may be applications for which a manufacturer may want to allow a user to execute and be protected from malware, but for which a law enforcement entity may have a legitimate need to access.

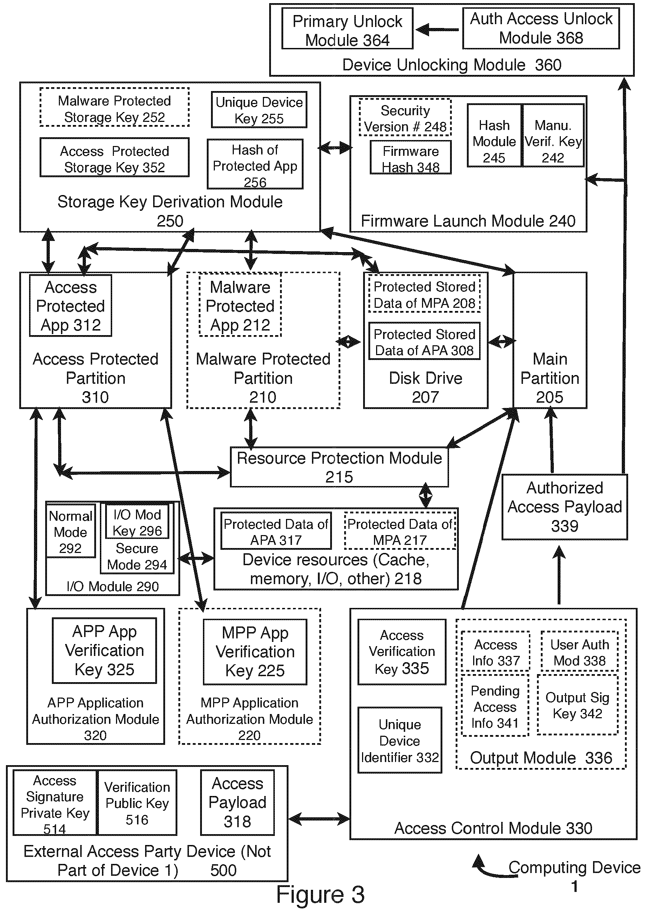

Thus, we introduce the embodiment in Figure 3 to address these issues.

Figure 3 describes an example embodiment of the current invention. In some embodiments, there are one or more Malware Protected Partitions **210** and one or more Access Protected Partitions **310.** The embodiment of each Malware Protected Partition **210** shown in Figure 3 is the same as described in Figure 2. In some embodiments, there are multiple Access Protected Partitions **310.**

In some embodiments, during the manufacturing of the device **1,** a Unique Device Key **255** is generated randomly and stored in nonvolatile storage **125** within the device **1.** In some embodiments, there may be multiple Unique Device Keys **255,** wherein some Unique Device Keys **255** are used for deriving storage keys **252, 352** for some partitions **210, 310,** and other Unique Device Keys **255** used for deriving storage keys **252, 352** for other partitions **210, 310.** An Access Protected Partition Application Verification Key **325,** and an Access Verification Key **335** are provided to the device **1** manufacturer and also placed in nonvolatile storage **125** within the device **1.**

Within the device **1,** there are at least two partitions for executing applications, a main partition **205** and a Access Protected Partition **310.** In some embodiments, there may be multiple Access Protected Partitions **310.** The Main Partition **205** and each Access Protected Partition **310** share some device resources **218** which may include access to common input devices **180,** output to common display devices **190,** and system memory **125, 130, 160, 170.** There is a Resource Protection Module **215** that allows an Access Protected Application **312** in the Access Protected Partition **310** to use data **317** (Protected Data of Access Protected Application **312)** from device **1** resources that cannot be viewed or modified by any software in the Main Partition **305** or in the Malware Protected Partition **210,** and allows an Access Protected Application **312** in the Access Protected Partition **310** to execute instructions that cannot be modified (without detection) by any software in the Main Partition **205** or in the Malware Protected Partition **210.** In some embodiments, there may be multiple Access Protected Applications **312** in an Access Protected Partition **310.**

In some embodiments, there may be two microprocessors **110** on the device 1, wherein the main partition **305** may include all of the applications that execute on one microprocessor **110,** and the Access Protected Partition **310** may include all of the applications that execute on another microprocessor **110.** In another embodiment, the main partition **305** may consist a normal OS and all of the applications running on that OS, and the Access Protected Partition **310** may consist of a secure OS and all of the applications running on that OS. In another case, the Access Protected Partition **310** may be just a set of software, and the Main Partition **305** may be all other software in the system. The design of the Resource Protection Module **215** is different in these three embodiments, and may be implemented as a set of modules in different portions of the device **1.**

The Firmware Launch Module **240** handles the launching of any firmware on the microprocessor **110** that executes the software in the Access Protected Partition **310,** and is in the trusted computing base of the protected partition. The Hash Module **245** computes a cryptographic hash for each piece of the firmware in the trusted computing base of the Access Protected Partition **310.** The resulting Hash **348** after each piece of the firmware has been hashed together is passed to the Storage Key Derivation Module **250.** The Storage Key Derivation Module **250** computes an Access Protected Storage Key **352** as the output of a Pseudo Random Function, with input including the Hash **348** of the Firmware and the Unique Device Key **255.** A cryptographic hash **256** of an application **312** in the Access Protected Partition **310** is computed by the Storage Key Derivation Module **250** for use as an additional input into the Pseudo Random Function for computing the Access Protected Storage Key **252.** In an embodiment with multiple Access Protected Partitions **310,** partitions **310** executing different applications **312** will receive different Access Protected Storage Keys **352,** since the hash **256** of the application **312,** and thus the input to the Pseudo Random Function will be different. In one embodiment, this storage key **352** is used by the Access Protected Partition **310** for encrypting data before storing the data in permanent storage **308,** such as a disk drive **207.** In some embodiments, there are multiple firmware and software segments in the trusted computing base of the Access Protected Partition **310** that are verified. In some embodiments, the Hashes of multiple firmware and software segments are used in Device **1** for providing protection for an Access Protected App **312;** and Protected Data **308, 317** of an Access Protected App **312** are provided to the Storage Key Derivation Module **250** for use as input to a Pseudo Random Function for producing the Access Protected Storage Key **352.**

In some embodiments, an Access Protected Application **312** in Access Protected Partition **310** has data that it wants to keep secret from the Main Partition **205,** and for which it wants assurance that it can detect any modification to that data. In some embodiments, this is accomplished by having the Access Protected Application **312** use the Access Protected Storage Key **352** to cryptographically protect the data secrecy and integrity when the data is stored in Protected Stored Data of Access Protected App **308** in the Disk Drive **207.**

In some embodiments, the Resource Protection Module **215** provides protection for input and output for an Access Protected App **312,** so that input from a user is provided to the Access Protected App **312** in a way that prevents access from any software in the Main Partition **205** or the Malware Protected Partition **210;** and display to a screen is provided to the Access Protected App **312** in a way that prevents access from any software in the Main Partition **205.** In some embodiments, the I/O Module **290** for input or output has a normal mode **292** and a secure mode **294.** In the normal mode **292,** the I/O module is used by any partition **205, 210, 310** on the platform **1.** The secure mode **294** is used by an Access Protected App **312** for protected I/O. In some embodiments, the Resource Protection Module **215** keeps data **317** transferred between an Access Protected App **312** and the secure mode **294** of the I/O module **290** from being accessed by any software in the Main Partition **205.** In some embodiments, a cryptographic key exchange is performed between secure mode **294** of I/O module **290** and an Access Protected App **312,** and cryptography is used to protect data **317** of an Access Protected App **312** being transferred between an Access Protected App **312** and the secure mode of the I/O Module **290.** In some embodiments, this cryptographic key exchange uses a Public/Private Key pair, I/O Mod Keys **296** in the Secure Mode **294** of an I/O Module **290,** and a Public/Private Key pair created and used by an Access Protected App **312.**

It is useful to note that the Protected Stored Data of Access Protection Application **308** stored in Disk Drive **207** and encrypted with the Access Protected Storage Key **352** will be inaccessible to any external party, including the Device **1** manufacturer who could release an alternate version of firmware or software for the Device **1.**

Software launched in the Access Protected Partition **310** requires an approval from the Access Protected Partition Application Authorization Module **320.** In some embodiments, an Access Protected Partition **312** to launch in the Access Protected Partition **310** and a digital signature are loaded into memory. The APP Application Authorization Module **320** checks whether the digital signature is valid using the APP Application Verification Key **325.** The Access Protected Application **312** is allowed to execute in the Access Protected Partition **310** only if it passes this signature verification check.

Examples of Access Protected Applications **312** approved for executing in an Access Protected Partition **310** include software that communicates with some institution doing communications that are unlikely to be of primary interest to Law Enforcement. If Law Enforcement did need access, they could do that through the institution. Example institutions include financial institutions, health record institutions, and corporations regarding their communications with employees.

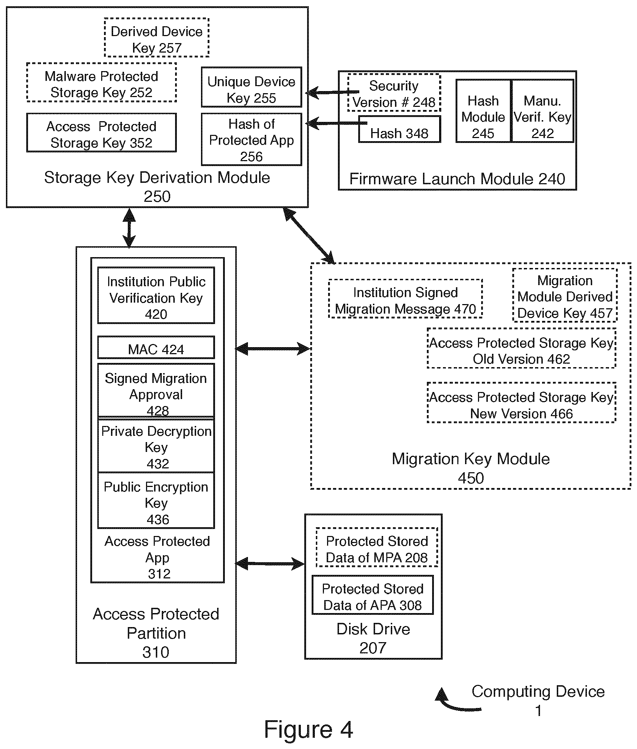

Figure 4 describes an embodiment of the invention in which an Access Protected Application **312** in an Access Protected Partition **310** is used to communicate securely with an Institution. Figure 4 describes additional optional functionality in the modules of the Firmware Launch Module **240,** the Storage Key Derivation Module **250,** and the Access Protected Application **312** from Figure 3. The Institution creates a digital signature public / private key pair, an Institution Public Verification Key **420,** and an Institution Private Signature Key, which the Institution protects and uses in their own facility. The Institution Public Verification Key **420** is placed in the software of the Access Protected Application **312,** and is thus part of the hash of the Access Protected Application **312** sent to the Storage Key Derivation Module **250** for input in computing the Access Protected Storage Key **352.**

In some embodiments, an attestation is required of the software in the Access Protected Application **312,** and the trusted computing base of the Access Protected Partition **310.** This is provided using the same modules and methods as prior art uses for providing attestation to Malware Protected Partitions. In some embodiments, the Access Protected Application **312** creates a Public / Private key pair for encryption, keeps the Private Decryption Key **432** secret, and sends the Public Encryption Key **436** to the Institution as part of an attestation so that the Institution knows the hash of firmware and software in the Trusted Computing Base of the Access Protected Partition **310** and the software in the Access Protected App **312** holding the Private Decryption Key **432.** The Institution then uses this key **432** for secure communication with the Access Protected Application **312.**

In some embodiments, there is a desire to update some of the firmware and software in the trusted computing base of the Access Protected Partition **310.** As described above, after such a change to the firmware, the Access Protected Storage Key **352** will be different, and thus the Access Protected Application **312** cannot get to previously Protected Data **309** encrypted with the previous Access Protected Storage Key **352.** In some embodiments, the Institution approves the change in the trusted computing base, and approves that it is safe to migrate the Protected Data **308** of the Access Protected Application **312** from the previous version of the Firmware and Software in the trusted computing base of the Access Protected Partition **310** to the new version. Figure 4 describes an embodiment of the capability to provide this approved migration.

To explain, suppose that the Device **1** is currently using version 4 of the Firmware and Software in the Trusted Computing Base of the Access Protected Partition **310.** TCB-v4 denotes version 4 of the Firmware and Software in the Trusted Computing Base of the Access Protected Partition **310.** TCB-v5 denotes version 5 of the Firmware and Software in the Trusted Computing Base of the Access Protected Partition **310.** When the Device launches with TCB-v4, let APSK-v4 denote the Access Protected Storage Key **352** that is generated by the Storage Key Derivation Module **250** and provided to the Access Protected Application **312.** Similarly, when the Device launches with TCB-v5, let APSK-v5 denote the Access Protected Storage Key **352** that is generated by the Storage Key Derivation Module **250** and provided to the Access Protected Application **312.** The Institution signifies its approval for migrating Protected Data **308** in TCB-v4 to TCB-v5 by producing a Signed Migration Approval **428** by signing {Approve for Migration, Hash(TCB-v4), Hash(TCB-v5)} with the Institution Private Signature Key, where the Hash(TCB-v4) is computed in an identical computation to the method used by Firmware Launch Module **240** and the Storage Key Derivation Module **250** to compute the Hash(TCB-v4) when TCB-v4 is launched on the device. Similarly for TCB-v5. The Signed Migration Approval **428** is provided to the Access Protected Application **312.** The Signed Migration Approval **428** is not a secret value, and is stored unencrypted. When the device is launched with TCB-v4, the Access Protected Application **312** computes a cryptographic MAC **424** of the Institution Public Verification Key **420,** and APSK-v4. In one embodiment, this cryptographic MAC **424** is computed as MAC **424** = SHA3(APSK-v4, Institution Public Verification Key **420).** This MAC **424** is not a secret value, and so the Access Protected Application **312** stores the MAC **424** unencrypted.

When the device **1** is launched with TCB-v5, the Storage Key Derivation Module **250** computes APSK-v5 as the Access Protected Storage Key **352** provided to the Access Protected Application **312** The Access Protected Application **312** provides Institution Public Verification Key **420,** H = Hash(TCB-v4), MAC **424** and Signed Migration Approval **428** to the Storage Key Derivation Module **250.** The Storage Key Derivation Module **250** takes the input H, and computes the APSK-v4 using H as the Hash(TCB-v4). It then computes SHA3(APSK-v4, Institution Public Verification Key **420)** and checks that this matches MAC **424** provided by the Access Protected Application **312.** It then uses the Institution Public Verification Key **420** to check the digital signature in Signed Migration Approval **428.** If these checks all pass, the Storage Key Derivation Module **250** encrypts APSK-v4 using APSK-v5 as the encryption key, and provides that encrypted value to the Access Protected Application **312.** The Access Protected Application **312** then determines the value of APSK-v4 by decrypting with APSK-v5. In another embodiment, the Storage Key Derivation Module **250** provides the value APSK-v4 to the Access Protected Application **312** directly.

In some embodiments, the computation of the Access Protected Storage Key **352** is done in a sequence of steps, because there are multiple firmware and software segments in the trusted computing base of the Access Protected Partition **310.** In some embodiments, the hash of a first firmware segment, Hash(Firmware Segment 1) **348** is provided to the Storage Key Derivation Module **250,** which then computes Derived Device Key **257** = PRF(Unique Device Key **255,** Hash(Firmware Segment 1) **348).** The Firmware Launch Module **240** may receive another Firmware Segment 2. The Firmware Launch Module **240** computes Hash(Firmware Segment 2) **348,** which is provided to the Storage Key Derivation Module **250.** The Storage Key Derivation Module **250** computes a new Derived Device Key **257** <-PRF(Derived Device Key **257,** Hash(Firmware Segment 2) **348).** This can be repeated for each additional firmware segment. In some instances, the Firmware Launch Module **240** may be provided a segment of software, which it hashes and provides the Hash **348** to the Storage Key Derivation Module **250** for further Derived Device Key **250** derivation computation. In this embodiment, after the Storage Key Derivation Module **250** is provided with the software in the Access Protected Application **312,** it computes Access Protected Storage Key **352** = PRF(Derived Device Key **257,** Hash(Software in Access Protected Application **312)).** In this embodiment, a Migration Key Module **450** is used to provide for the approved migration of an Access Protected Storage Key **352** computed from one version of firmware and software to another version. In some embodiments, for security purposes, the Migration Key Module **450** is executed with no updateable firmware or software in its trusted computing base. The Migration Key Module **450** has access to the Unique Device Key **255.** Continue the example of above of migrating the Access Protected Storage Key **352** from version 4 (APSK-v4) to version 5 (APSK-v5). The Migration Key Module **450** is provided with the Hash of each firmware and software segment used in the key derivation of the derived device key **257,** for version 4, namely, Hash(Firmware Segment 1-v4), Hash(Firmware Segment 1-v5), etc. and the Hash(Software in Access Protected Application -v4 **312).** Similarly, the Migration Key Module **450** is provided with the Hash of each firmware and software segment used in the key derivation of the derived device key **257,** for version 4, namely, Hash(Firmware Segment 1-v4), Hash(Firmware Segment 1-v5), etc. and the Hash(Software in Access Protected Application -v5 **312).** The Migration Key Module **450** is also provided with the Institution Public Verification Key **420,** and the MAC **424** of the Institution Public Verification Key **420,** and APSK-v4. In this embodiment, the Institution digitally signs with the Institution Private Signature Key a message {Approve for Migration; From TCB, Hash(Firmware Segment 1-v4), Hash(Firmware Segment 2 - v4), ..., Hash(Software in Access Protected Application-v4); To TCB, Hash(Firmware Segment 1-v5), Hash(Firmware Segment 2 - v5), ..., Hash(Software in Access Protected Application-v5)}. This signed message is also provided to the Migration Key Module **450.** The Migration Key Module **450** computes the key derivation sequence for v4, by using the values provided in the signed message from the Institution to compute Migration Module Derived Device Key **457** = PRF(Unique Device Key **255,** Hash(Firmware Segment 1-v4)), then computing a new Migration Module Derived Device Key **457** <-- PRF(Derived Device Key **457,** Hash(Firmware Segment 2-v4)). The Migration Key Module **450** repeats this for each additional firmware segment for v4 provided in the Institution signed message. Module **450** computes Access Protected Storage Key Old Version **462** = PRF(Derived Device Key **457,** Hash(Software in Access Protected Application)). The Migration Key Module **450** stores the Access Protected Storage Key Old Version **462.** The Migration Key Module **450** does the same process using the values provided in the Institution signed message for v5. Specifically, the Migration Key Module **450** computes the key derivation sequence for v5, by using the values provided in the signed message from the Institution to compute Migration Module Derived Device Key **457** = PRF(Unique Device Key **255,** Hash(Firmware Segment 1-v5)), then computing a new Migration Module Derived Device Key **457** <-- PRF(Derived Device Key **457,** Hash(Firmware Segment 2-v5)). The Migration Key Module **450** repeats this for each additional firmware segment for v5 provided in the Institution signed message. It computes Access Protected Storage Key New Version **466** = PRF(Derived Device Key **457,** Hash(Software in Access Protected Application)). The Migration Key Module **450** stores the Access Protected Storage Key Old Version **466.** The Migration Key Module **450** computes MAC(Institution Public Verification Key **420,** Access Protected Storage Key Old Version **462)** and checks that this is equivalent to the MAC **424** provided to the Migration Key Module **450.** If this check does not pass, the Migration Key Module **450** stops the computation, and erases its memory. The Migration Key Module **450** checks the signature on the Institution Signed Migration Message **470** using the Institution Public Verification Key **420.** If this check does not pass, the Migration Key Module **450** stops the computation, and erases its memory. If all of the checks pass, the Migration Key Module **450** encrypts Access Protected Storage Key Old Version **462** using Access Protected Storage Key New Version **466** as the encryption key, and provides that encrypted value to the Access Protected Application **312.** If all of the firmware and software segments and software in the Access Protected Application **312** that were used in the launch of the Access Protected Application **312** were the same as the hashed segments used for v5 in the Institution Signed Migration Message **470,** the Access Protected Storage Key **352** provided to the Access Protected Application **312** will be the same as the Access Protected Storage Key New Version **466.** The Access Protected Application **312** determines the value of Access Protected Storage Key Old Version **462** by decrypting with Access Protected Storage Key New Version **466.** In another embodiment, the Storage Key Derivation Module **250** provides the value Access Protected Storage Key Old Version **462** to the Access Protected Application **312** directly.

In some embodiments, the Hash of the Access Protected Application **312** is not used in the above computations.

In some embodiments of the current invention, an authorized external party is provided with access to information processed and used by the Main Partition **205.** In some embodiments, that access does not include giving the party any access to protected data **308, 317.** There is an access control module **330** on the device **1** (see Figure 3), which verifies the validity of a request to access the device 1. The Access Control Module **330** has access to a Unique Device Identifier **332** on the device **1.** In some embodiments, the Unique Device Identifier **332** is a permanent identifier stored in non-volatile storage **125** on the device **1,** and in other embodiments, the Unique Device Identifier **332** is a temporary identifier. The Unique Device Identifier **332** is provided to the External Access Party Device **500.** The Authorized External Party Device **500** digitally signs a request for access. The request includes the Unique Device Identifier **332,** and an Access Payload **318.** The request is digitally signed by the Access Signature Private Key **514.** The signed request is provided to the Access Control Module **330.** The Access Control Module **330** checks that the signature includes the Unique Device Identifier **332,** and checks the validity of the signature of the Authorized External Party using the Access Verification Key **335.** If these checks pass, the Access Control Module **330** creates an Authorized Access Payload **318** which will be provided to other modules in the device **1** to enable the access requested by the signed Access Payload **318.** In some embodiments, the Access Verification Public Key **335** and the Access Signature Private Key **514** are a public / private key pair of a digital signature system. In other embodiments, the Access Verification Public Key **335** is a public key of a certification authority, and the Access Signature Private Key **514** is part of a digital signature private / public key pair **514, 516,** in which there is a certificate for the Verification Public Key **516** in the certificate hierarchy of the certification authority.

At this point in the disclosure, it will be further instructive to the reader to explain how existing computer architectures mentioned earlier in this patent application can be modified to meet the embodiments of the system described in Figure 3. The existing computer architectures do not have the Access Control Module **330,** so that would need to be added. Also, the existing computer architectures do not have the capability for Partition Approved Migration, so that would need to be added as well. Other specific changes are mentioned below.

The Intel Manageability Engine (also called the Converged Security and Manageability Engine) is an embodiment of Figures 1 and 2 in which the Main Partition **205** is executed on one microprocessor **110** and the Malware Protected Partition **210** is executed on a different microprocessor **110.** To meet the embodiment described in Figure 3, in addition to adding the Access Control Module **330,** and the Partition Approved Migration, a third microprocessor **110** to execute the software in the Access Protected Partition is added to have the functionality as described above.

The ARM implementation of the Trusted Execution Environment specification using ARM Trust Zone is an embodiment of Figures 1 and 2 in which the Main Partition **205** and the Malware Protected Partition **210** are two different modes (called Normal Mode and Secure Mode) that execute different operating systems on the same microprocessor **110.** To meet the embodiment described in Figure 3, in addition to adding the Access Control Module **330,** and the Partition Approved Migration, a third mode to execute the software in the Access Protected Partition **310** is added to have the functionality as described above. If an implementation of ARM Trust Zone does not have the functionality of the Firmware Launch Module **240** and the Storage Key Derivation Module **250,** the functionality of the Firmware Launch Module **240** and the Storage Key Derivation Module **250** are added to the implementation.

The Intel Software Guard Extensions (SGX) is an embodiment in which there are multiple Malware Protected Partitions **210** executing iMalware Protected Applications **212,** using the same operating systems and processors as the Main Partition **205.** To meet the embodiment described in Figure 3, in addition to adding the Access Control Module **330,** and the Partition Approved Migration, a new instruction, EGETPROTECTEDKEY is added to SGX. This instruction is allowed to be executed only by enclaves executing as Access Protected Applications **312** in the Access Protected Partition **310.** It is similar to the EGETKEY instruction of SGX. When EGETPROTECTEDKEY is executed, if the enclave is in the Access Protected Partition **310,** it returns the result of a cryptographic computation with input the Protected Platform Storage Key and the MRENCLAVE. The enclave can then use the result of EGETPROTECTEDKEY to encrypt data for permanent storage **308.** Then if the device is booted with any change to the firmware in the Trusted Computing Base of the enclave, the data **308** stored by this enclave encrypted with the result of EGETPROTECTEDKEY is available. This is the important distinction with the existing SGX architecture. For in the existing SGX architecture, if an authorized signer of firmware in the Trusted Computing Base of the enclave signed a piece of firmware that allowed access to an external party, and gave that piece of firmware the same security version number, EGETKEY would produce the same result, and the external party would obtain access that was unauthorized, specifically, access without an approval from the Access Control Module **330.**

In some embodiments, the Authorized External Party has physical access to the device **1,** and the device **1** is locked, with a password required to unlock it. In some embodiments, the device **1** has a Device Unlocking Module **360** which unlocks the device **1** when valid authorization is provided to the Device Unlocking Module **360.** In some embodiments, the Device Unlock Module **360** produces an unlock key used to decrypt data on a disk drive **207** when valid authorization is provided to the Device Unlock Module **360.** In some embodiments, the Device Unlocking Module **360** includes two modules, a Primary Unlock Module **364** which checks whether an entered password is valid, and an Authorized Access Unlock Module **368** that unlocks the device when a valid Authorized Access Payload **339** is provided to the Authorized Access Unlock Module **368.** In some embodiments, the Primary Unlock Module **364** checks for a biometric of the user, or some other input from the user, such as a sweep pattern on a touch screen. In some embodiments, the Primary Unlock Module **364** gives the user a limited number of tries to enter the correct password.

In one embodiment, the Access Payload **318** contains a request to unlock the device **1,** and the Authorized Access Payload **339** contains a request to the Device Unlocking Module **360** to unlock the device 1. The Authorized Access Unlock Module **368** unlocks the device **1** as a result of receiving this request. This gives the Authorized External Party access to the Main Partition **205.** In another embodiment, the Authorized Access Unlock Module **368** does not unlock the device **1** directly, but sends a signal to the Primary Unlock Module **364** to allow for an unlimited number of guesses to enter a valid password of the user.

In some embodiments, a password or other authorization method is required by the Access Protected Application **312** to use some of the functionality in Access Protected Application **312.** The Authorized External Party is not able to access the protected data **308** of this Access Protected Application **312** without this password, and because of the protections of the Resource Protection Module **215,** and because of the encryption by the Access Protected Application **312** of the protected data **308** stored by it on the Disk Drive **207.** In some embodiments, the user is recommended to use a strong password for access to an Access Protected Application **312.** In some embodiments, the user is recommended to use a different password than the one which unlocks the device **1.** In some embodiments, the Device Unlocking Module **360** provides a value derived from the password entered by the user to unlock the device **1** to the Access Protected Application **312,** and the Access Protected Application **312** uses this value to authorize access to the Access Protected Application **312.** In such an embodiment, if the user has entered the correct password at the time of unlock, the user does not need to enter a password again for access to the Protected Application **312.** However, when the Device Unlocking Module **360** unlocks the device **1** because of an Authorized Access Payload **339,** the Device Unlocking Module **360** does not provide a valid password to the Access Protected Application **312.**

In some embodiments, the Authorized Access Payload **339** is embodied in firmware. The Access Control Module **330** provides the Authorized Access Payload **339** to the Firmware Launch Module **240** during the launch of the firmware. In some embodiments, the Firmware Launch Module **240** boots the device **1** using this firmware in the Authorized Access Payload **339.** In some embodiments, the Firmware Launch Module **240** requires a digital signature verified by the Manufacturers Verification Key **242** to launch any firmware in an Authorized Access Payload **339.** In some embodiments, the Firmware Launch Module **240** requires a digital signature on the firmware including the Unique Device Identifier **332** verified by the Manufacturers Verification Key **242** to launch any firmware in an Authorized Access Payload **339.** The Firmware Launch Module **240** hashes the provided firmware with the Hash Module **245** and provides the resulting hash **348** to the Storage Key Derivation Module **250.** The Firmware Launch Module **240** also sends the Security Version Number **248** to the Storage Key Derivation Module **250.** The Access Protected Storage Key **352** is computed by the Storage Key Derivation Module **250,** but it will be different from the Access Protected Storage Key **352** that was generated the last time the device **1** booted. Thus, the Protected Data **308** of the Access Protected Application **312** in the Access Protected Partition **310** will not be available. However, if the Security Version Number **248** is the same as the Security Version Number **248** the last time the device **1** booted, the Malware Protected Storage Key **252** is the same as the last time the device **1** booted. If the firmware in the Authorized Access Payload **339** had the property that it removed some of the security barriers provided by the Resource Protection Module **215,** the External Access Party is able to access any protected data **208, 217** in the Malware Protected Partition **210.**

In an alternate embodiment, the Authorized Access Payload **339** contains firmware which is executed on the device **1.** The Firmware Launch Module **240** launches the device **1** as described above using the firmware in the Authorized Access Payload **339,** but does not provide a Hash **348** to the Storage Key Derivation Module **250.** In this embodiment, the Protected Data **308, 317** of the Access Protection Application **312** in the Protected Partition **310** is not available.

In some embodiments, the Authorized Access Payload **339** contains firmware which is executed on the device **1.** The Firmware Launch Module **240** launches the device **1** as described above using the firmware in the Authorized Access Payload **339.** The firmware in the Authorized Access Payload **339** makes a change to the Device Unlocking Module **360.** In some embodiments, this change allows for an unlimited number of tries to enter the password. One potential drawback to this embodiment is that if the Authorized External Access Party is successful at guessing the password, he could then reboot the device **1** with this password. This might allow the Authorized External Access Party easy access to the Access Protected Partition **310.**

In some embodiments, the Authorized Access Payload **339** contains firmware, and the device **1** has a protection mechanism that requires validation of a digital signature on the firmware before it is written to the boot section of memory **125, 160,** or **170.** In such an embodiment, the Authorized Access Payload **339** is given permission to be written to the boot section of memory as required.

In some embodiments, after the Access Control Module **330** has verified the validity of the access request, the access that it provides to the Authorized External Party is the ability to execute software in the Main Partition **205.** In one embodiment, the Authorized Access Payload **339** contains software. The software is placed into memory **130 or 160** and that region of memory is given permission to execute with a high privilege, but no higher privilege than any other software in the Main Partition **205.** It is important to note that the current invention provides protection for the user in this case. Because the software is allowed to execute only in the Main Partition **205,** the Resource Protection Module **215** and the encryption of the Access Protected Application **312** for the Protected Data of Access Protected Application **308** stored in the Disk Drive **207** still keeps the software from accessing any protected data **308, 317** of the Access Protected Application **312.**

In some embodiments, the Access Control Module **330** includes an Output Module **336.** The Output Module is informed each time an Authorized Access Payload **339** is produced by the Access Control Module **330.** Information about the Authorized Access Payload **339** is stored in Access Info **337,** which is non volatile storage **125** available to the Output Module **336.** In some embodiments, the Access Info **337** is the number of times that an Authorized Access Payload **339** has been produced. In some embodiments, the Access Info includes a hash chain derived from input from Authorized Access Payloads **339.** In some embodiments, any information from an Authorized Access Payload **339** may not be included in real time in the Access Info **337,** but may be stored temporarily in Pending Access Info **341,** and added to the Access Info **337** after the passage of some specified time. In some embodiments, upon a request, the Output Module **336** provides the Access Info **337** to the Main Partition **205.** In some embodiments, the Output Module **336** also provides a digital signature of the Access Info **337** using an Output Signature Key **342.** In some embodiments, this signed message may also include the Unique Device Identifier **332.** In some embodiments, the Output Module **336** requires a successful user authentication, including a success message from a User Authentication Module **338** before Access Info **337** is released.

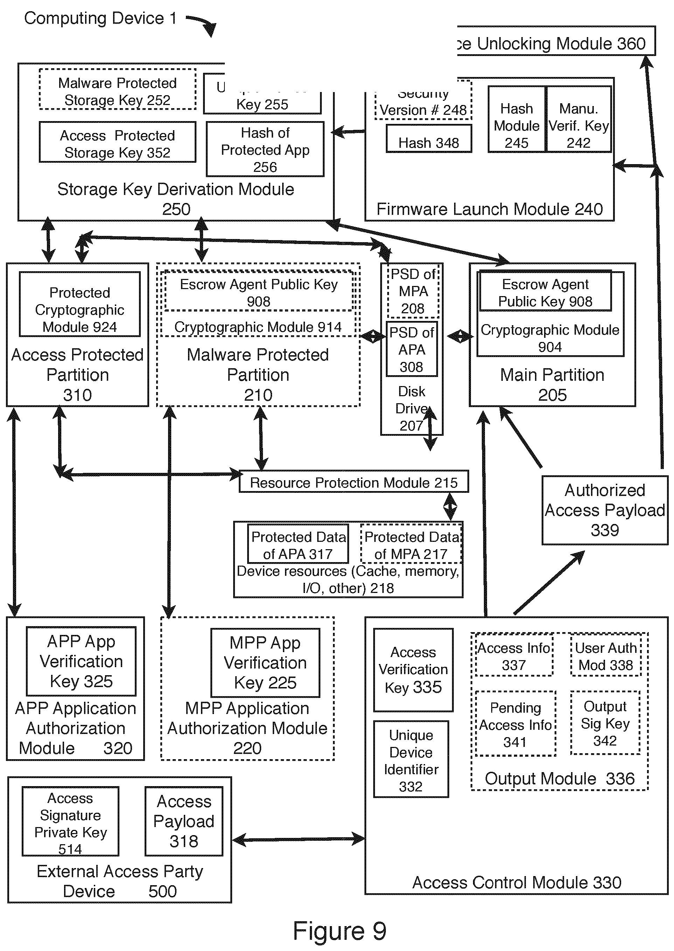

In some embodiments, an Authorized External Access Party desires to view communications from the Device **1** that have been encrypted. Figure 9 illustrates an embodiment of this capability. In some embodiments, the Main Partition **205** has access to a Cryptographic Module **904** in which keys used for encryption are subject to a key escrow system wherein the Authorized External Access Party has the capability to decrypt communications encrypted with those keys. In some embodiments, the Access Protected Application **312** is allowed to use a Protected Cryptographic Module **924** which does not have key escrow of any of the keys in the Protected Cryptographic Module **924.** In some embodiments, the Cryptographic Module **904** contains an Escrow Agent Public Key **908,** which is the public part of a public/private encryption/decryption key pair, where the private part of the key pair **516** is kept in an External Access Party Device **500.** For any use of an encryption key, the Cryptographic Module **904** encrypts the Encryption Key with the Escrow Agent Public Key **908,** and includes this encrypted key with the encrypted information. In some embodiments, there are multiple Escrow Agent Public keys **908** in the Cryptographic Module **904.** In some embodiments, an Encryption Key used by the Cryptographic Module **904** is split into multiple pieces, for example, Encryption Key = Piece1 XOR Piece2 XOR Piece3. Each Piece is encrypted with a different Escrow Agent Public key **908.** All of the encrypted keys are included in the communication. Figure 9 describes one key escrow system, but any key escrow system could be used instead. In some embodiments, a Cryptographic Module **914** with a key escrow feature is also available to Malware Protected Partition **210.**

### Method for protecting the keys of the Access authorities.

In an embodiment, the Access Signature Private Key **514** and the Escrow Agent Private Key **516** are in a device **500** that can provide evidence that all use of these keys **514, 516** for authorizing external access or decrypting messages can be provided to auditors. In some embodiments, an External Access Party Device **500** may have only one of the keys **514, 516.**

An unalterable execution environment is an application in a device in which the device provides the application with a key that can encrypt data for storage, with the property that the key that is provided to the application is dependent upon all of the firmware and software in the trusted computing base of the application and the software in the application. In particular, the provided key changes if there is any change in any of the firmware and software in the trusted computing base of the application or the software in the application.

An attestable, unalterable execution environment is an unalterable execution environment in which it is possible to demonstrate to an auditor that a private key corresponding to a known public key is contained within the environment, and the cryptographic hash of all firmware and software in the trusted computing base of the environment.

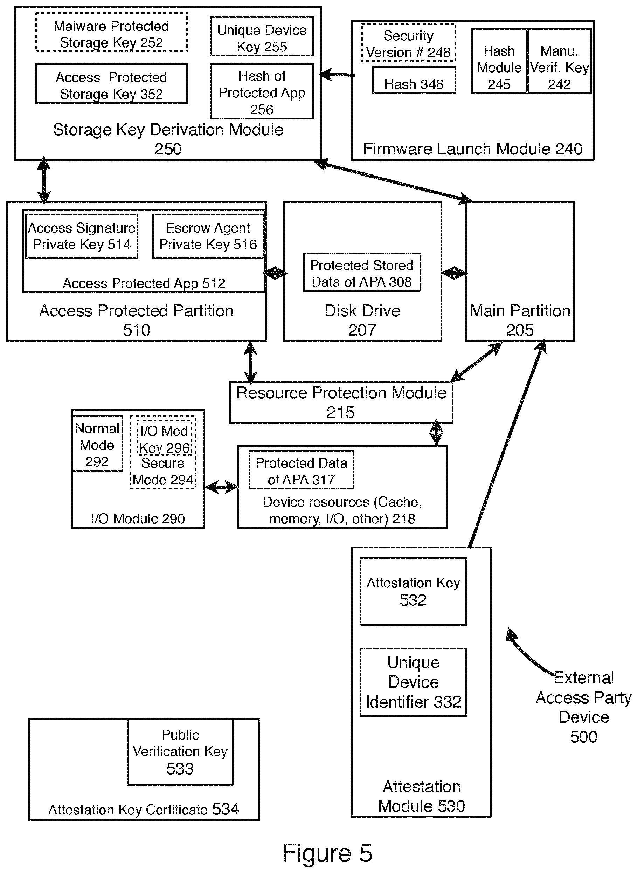

Figure 5 describes a device **500** that is an embodiment of an attestable, unalterable execution environment. The embodiment described in Figure 5 is similar to the embodiment described in Figure 3, with Access Protected Partition **510** and Access Protected Application **512** in Figure 5 corresponding to Access Protected Partition **310** and Access Protected Application **312** in Figure 3, except that there is no Access Control Module **330,** or Access Protected Partition Application Authorization Module **320,** and there is an attestation module **530.**

The Attestation Module **530** contains an attestation key **532.** In some embodiments, the attestation key **532** is a private digital signature key of a private digital signature key **532** / public verification key **533** pair. In some embodiments, there is an Attestation Key Certificate **534** issued by the device **500** manufacturer certifying that private signature key **532** corresponding to public verification key **533** is indeed held securely in a device **500** of this type made by the device **500** manufacturer. When an attestation of the Access Protected Application **512** in an Access Protected Partition **510** is requested, the Attestation Module **530** receives a firmware Hash **348** of the firmware used to launch the device, and an App Hash **256** of the Access Protected App **512** The Attestation Module **530** digitally signs a combination of Firmware Hash **348** and App Hash **256** with the Attestation Key **532.** In some embodiments, there may be additional firmware and software in the trusted computing base of the Access Protected Partition **510,** wherein, the hashes of this firmware and software will also be combined in the data signed by the Attestation Key **532** for this attestation.

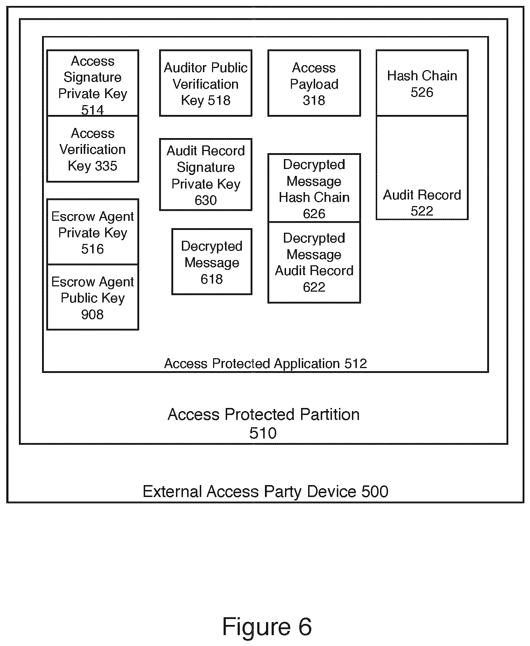

Figure 6 is an expanded description of the Access Protected Application **512** in the External Access Party Device **500.**

In some embodiments, an Access Signature Private Key **514** and corresponding Access Verification Key **335** (also shown in Figure 3) are created inside the Access Protected Application **512.** In some embodiments, an Escrow Agent Private Key **516** and corresponding Escrow Agent Public Key **908** (also shown in Figure 9) are created inside the Access Protected Application **512.** The Access Verification Key **335** is provided to the Attestation Module **530** to be included as data to the attestation to provide evidence that the Access Signature Private Key **514** and/or the Escrow Agent Private Key **516** are in an Access Protected Application **512** in an Access Protected Partition **510.**

In some embodiments, an Audit Record Signature Private Key **630** and corresponding Audit Record Verification Key **518** are created inside the Access Protected Application **512.** The Audit Record Verification Key **518** is provided to the Attestation Module **530** to be included as data to the attestation to provide evidence that the Audit Record Signature Private Key **630** is in a Protected Application **512.**

In some embodiments, an auditor creates a auditor private signature / auditor public verification key pair on a device of his choosing. The auditor sends his Auditor Public Verification Key **518** to the External Access Party Device **500.** This key **518** is inserted into the Access Protected Application **512.** The Access Protected Application **512** digitally signs receipt of the Auditor Public Verification Key **518** by the Audit Record Signature Private Key **630** and provides the digital signature to the auditor. In some embodiments, the Access Signature Private Key **514** and the Audit Record Signature Private Key **630** are the same key.

In some embodiments, for every use of the Access Signature Private Key **514** to sign a an Access Payload **318,** the Access Protected Application **512** produces an audit record **522** which includes the Access Payload **318.** In some embodiments, the audit record **522** is a hash chain, where each Signed Access Payload **318** is appended to the hash chain. In some embodiments, the Signed Access Payload **318** is appended as (New) HASH CHAIN **526=** HASH (Access Payload, (Old) HASH CHAIN **526).** For each Access Payload **318** that is digitally signed by the Access Signature Private Key **514,** the Access Protected Application **512** creates the Audit Record **522** containing the Access Payload **318** and the (new) Hash Chain **526.** In some embodiments, this Audit Record **522** is signed by the Audit Record Signature Private Key **514.**

In some embodiments, for every use of the Escrow Agent Private Key **516** to produce a decrypted message **618,** the Access Protected Application **512** produces a decrypted message audit record **622** which includes the decrypted message **618.** In some embodiments, the decrypted message audit record **622** includes a hash chain, where the hash of each Decrypted Message **618** is appended to the hash chain. In some embodiments, the hash of the Decrypted Message **618** is appended as (New) HASH CHAIN **626=** HASH (Access Payload, (Old) HASH CHAIN **626).** For each Decrypted Message **618** that is decrypted by the Escrow Agent Private Key **516,** the Access Protected Application **512** creates the Decrypted Message Audit Record **622** containing the Decrypted Message **618** and the (new) Hash Chain **626.** In some embodiments, this Decrypted Message Audit Record **622** is signed by the Audit Record Signature Private Key **514.** In some embodiments, the new Hash Chain **626** may be added to the Decrypted Message Audit Record **622** in real time, and the Decrypted Message **618** may be added to the Decrypted Message Audit Record **622** at a later time as determined by a time delay. The time delay may be dependent upon the source of the message that was decrypted. In some embodiments, the time delay is produced by having recent additions to the audit record **622** encrypted with a cryptographic key that could be broken in a reasonable amount of time with reasonable resources. Older additions to the audit record **622** are provided to the auditor in a form the auditor can read in real time.

In the following description, it is understood that the term Private Keys **514, 516** will refer to both of the Access Signature Private Key **514** and the Escrow Agent Private Key **516** if both are present in the Access Protected Application **512,** or to only one of those keys if only one is present.

In some embodiments, it is desirable to protect against the possibility that an External Access Party Device **500** gets accidentally or intentionally destroyed after it has signed multiple Access Payloads **318,** or decrypted messages **618** and before the Audit Records **522, 622** have been received by the Auditor. Some embodiments provide this protection by requiring the receipt of a digital signature by the Audit Record Signing Key **630** of an existing Audit Record **522, 622** by the Auditor before signing more Access Payloads **318** with the Access Signature Private Key **514** or decrypting messages **618** with the Escrow Agent Private Key **516** In some embodiments, the Access Protected Application **512** requires the auditor's digital signature of the latest Audit Record **522, 622** prior to using one of the Private Keys **514, 516.** In some embodiments, the Access Protected Application **512** requires the auditor digital signature of the K'th latest Audit Record **522** for some integer K, prior to signing a new Access Payload **318.** In some embodiments, the Access Protected Application **512** requires the auditor digital signature of the K'th latest Decrypted Message Audit Record **622** for some integer K, prior to decrypting any new messages to produce a new Decrypted Message **618.** In some embodiments, the Access Protected Application **512** creates an Audit Record **522** containing an Access Payload **318,** and requires an auditor's digital signature on that new Audit Record **522** prior to signing the Access Payload **318** with the Access Signature Private Key **514.**

In some embodiments, an auditor receives a demonstration that the Private Keys **514, 516** are in an attestable, unalterable execution environment. That demonstration includes an attestation. If the attestation is done remotely, the trust that the auditor has in the demonstration is entirely dependent upon the security of the certification authority at the manufacturer. To reduce that dependence, the demonstration is performed with the auditor in physical proximity with the External Access Party Device **500.** In some embodiments, the auditor performs a test to assure that the Attestation Key **532** is physically present on the device **500** in the room. The device **500** is in a platform that the auditor can physically inspect. The device **500** has at least a keyboard and some output device. Upon inspection, the auditor receives confidence that there is no other device on the platform that could be performing an attestation. In some embodiments, the auditor assures that device **500** is not connected to any other device or network, either through a wired connection or a wireless connection. The auditor provides some previously unknown value to the device **500,** and requests a digital signature from that device **500** that includes that value. In some embodiments, that signature is created by the Access Signature Private Key **514.** In some embodiments, that signature is created by the Attestation Key **532.** The auditor checks the validity of that signature. In some embodiments, that is done by a device the auditor has with him. In alternative embodiments, the auditor makes copy of the signature and verifies it later. The auditor may also want to establish confidence that the External Access Party Device **500** is a real device of the manufacturer, and not a clone device made to look like the real device **500.** In some embodiments, the auditor will supply a series of workloads to the device **500** and measures the correctness of the output of these workloads, and the time required to perform them.

In some embodiments, the auditor may ask for firmware and software that is in the trusted computing base of the Access Protected Application **512.** The auditor checks the validity of that provided firmware and software by computing the hash and comparing to the hash of the trusted computing base digitally signed by the Attestation Key **532** in an attestation of the Access Protected Application **512.** In some embodiments, the auditor conducts a thorough review of this firmware and software. In particular, the auditor verifies that the software that executes in the Access Protected Application **512** follows all of the requirements of the auditor, such as the requirements described for creating Audit Records **522** and following the protocols for duplicating one of the Private Keys **514, 516.**

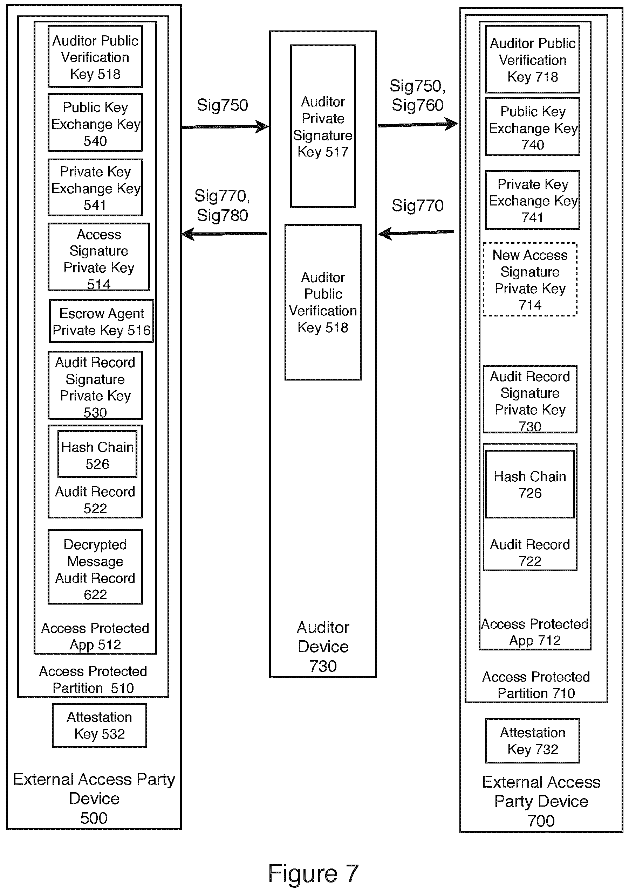

In some embodiments, the External Access Party desires to protect against destruction of the Private Keys **514, 516.** In some embodiments, the External Access Party duplicates one of the Private Keys **514, 516** into one or more additional External Access Party Devices **700.** Figure 7 describes an embodiment for a method to duplicate one of the Private Keys **514, 516** in a manner by which the Auditor can still maintain assurance that all uses of the Private Key **514, 516** are audited even though there are multiple copies. Figure 7 shows two External Access Party Devices, **500** and **700.** Device **500** and Device **700** both have the same architecture as described in Figure 5. Device **700** has an Access Protected Partition **710,** which executes Access Protected Apps **712.** The auditor checks the validity of the devices **500, 700** and that the attestation keys **532** and **732** are in these devices **500, 700** as described above. In some embodiments, the Access Protected Application **512** receives an attestation of Access Protected Application **712,** and Access Protected Application **712** receives an attestation of Access Protected Application **512.**

In some embodiments, Access Protected Application **512** and Access Protected Application **712** perform a cryptographically secure key exchange which is used to securely transport the Private Keys **514, 516** from Access Protected Application **512** to Access Protected Application **712,** with the additional steps that the auditor digitally signs each message sent during this protocol, and each Protected Application **512** and **712** checks the signature of the auditor using Auditor Public Verification Key **518** and **718** respectively on each message received from the other Access Protected Application **512.**

In one embodiment, the Auditor creates an Auditor Private Signature Key **517** and an Auditor Public Verification Key **518** in a Auditor Device **730.** The Auditor Public Verification Key **518** is provided to both Access Protected Application **512** and to Access Protected Application **712.** In some embodiments, different Auditor keys can be used for the Access Protected Application **512** and the Access Protected Application **712.** This key **518** is inserted into the Access Protected Application **512.** The Access Protected Application **512** digitally signs receipt of the Auditor Public Verification Key **518** by the Audit Record Signature Private Key **630** and provides this signature to the auditor. This key **518** is inserted into the Access Protected Application **712.** The Access Protected Application **712** digitally signs receipt of the Auditor Public Verification Key **518** by the Audit Record Signature Private Key **714** and provides this signature to the auditor.

In one embodiment, Access Protected Application **512** creates a Public **540** /Private **541** Key Exchange Pair, using Diffie Hellman or some similar cryptographic technique for performing a cryptographic key exchange.

In one embodiment, the Access Protected Application **512,** the Auditor Device **730,** and the Access Protected Application **712** participate in the following protocol. The Access Protected Application **512** creates a signature **Sig750** by signing the Public Key Exchange Key **540** as part of an attestation of the Access Protected Application **512,** by the Attestation Key **532.** In another embodiment, the Access Protected Application **512** creates a signature Sig**750** by signing the Public Key Exchange Key **540** with some other key that has already been attested to as belonging to the Access Protected Application **512.**

Sig**750** is sent to the Auditor Device **730.** The Auditor Device **730** verifies the signature, and that the key that created the signature was either the Attestation Key **532** or another key that had previously been attested to belong to the Access Protected Application **512.** If these checks verify, the Auditor Device **730** creates **Sig760** by signing the Public Key Exchange Key **540** with the Auditor Private Signature Key **517.** Both **Sig750** and **Sig760** are sent to the Access Protected Application **712.**

The Access Protected Application **712** verifies the signature of the auditor on Public Key Exchange Key **540,** and verifies that the key that created the signature was either the Attestation Key **532** or another key that had previously been attested to belong to the Access Protected Application **512.**

Continuing with the protocol, the Access Protected Application **712** creates a digital signature **Sig770** by signing the Public Key Exchange Key **740** as part of an attestation of the Access Protected Application **712,** by the Attestation Key **732.** In another embodiment, the Access Protected Application **712** creates a digital signature Sig**770** by signing the Public Key Exchange Key **740** with some other key that has already been attested to as belonging to the Access Protected Application **712.**

Sig**770** is sent to the Auditor Device **730.** The Auditor Device **730** verifies the signature, and that the key that created the signature was either the Attestation Key **732** or another key that had previously been attested to belong to the Access Protected Application **712.** If these checks verify, the Auditor Device **730** creates **Sig780** by digitally signing the Public Key Exchange Key **740** with the Auditor Private Signature Key **517.** Both **Sig770** and **Sig780** are sent to the Access Protected Application **512.**

The Access Protected Application **512** verifies the signature of the auditor on Public Key Exchange Key **740,** and verifies that the key that created the signature was either the Attestation Key **732** or another key that had previously been attested to belong to the Access Protected Application **712.**

Now the Access Protected Application **512** and the Access Protected Application **712** continue the Key Exchange Protocol to establish a shared symmetric key, which is then used by Access Protected Application **512** to encrypt and send the Access Signature Private Key **514** to the Access Protected Application **712.** Access Protected Application **712** decrypts and stores the Access Signature Private Key **514** for future use.

The software in the Access Protected Application **512** and **712** prevents the duplication of the Private Keys **514, 516** except by going through a similar audited protocol.

In some embodiments, an additional External Access Party Device **700** creates a new Access Signature Private Key **714,** and the original External Access Party application **512** digitally signs a certificate containing the new Access Verification Key **335** with the original External Access Party Private Key **514.** In some embodiments, any use of any keys in the External Access Party Application to duplicate the Private Keys **514, 516** or to certify additional External Access Signature Keys **714** requires the creation of an Audit Record **522, 622** and signature of the Audit Record **522, 622** verified by the Auditor Public Verification Key **518** prior to said duplication or certification.

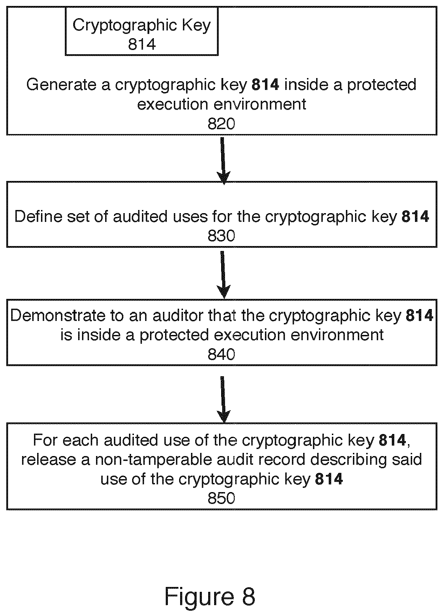

Figure 8 describes a method for an Auditor to ensure auditing the use of a cryptographic key. In step **820,** a cryptographic key **814** is generated inside an attestable, unalterable, execution environment, such as the one described in Figure 5. The reader will note the importance of this being an unalterable execution environment. For if the environment could be changed without any notification to the Auditor, for instance through a firmware update, and still have access to the Cryptographic Key **814,** the resulting firmware could allow some use of the cryptographic Key **814** that did not generate an audit record.

In step **830** of Figure 8, there is a defined set of uses of the cryptographic key **814** that must be audited. An embodiment of this was described above for auditing all uses of the Access Signature Private Key **514** for signing Access Payloads **318.** Another embodiment of this was described above for auditing all uses of the Escrow Agent Private Key **516** for producing Decrypted Messages **618.**

In step **840** of Figure 8, there is a demonstration to an auditor that the cryptographic key **814** is inside a protected execution environment. An embodiment of this was described above with two important steps. One was that the Attestation Key **532** was created on the device **500** during manufacturing. If the Attestation Key **532** was not created on the device **500,** the auditor would need to have a demonstration of the security of the generation, storage, and provisioning of the Attestation key **532** in order to be sure that a duplicate of the attestation key did not exist someplace else. The second important step was to have a demonstration while the auditor was physically present with the device **500** while knowing that the device **500** could not communicate over a network. This removed the possibility that the manufacturer could have certified the Attestation Key **532** even though it was not security resident in the type of device **500** claimed.

In step **850** of Figure 8, there is a release of a non-tamperable audit record describing each use of the cryptographic key **814** as described in step **830** of Figure 8. An embodiment of this was described above, in which the Access Protected Application **512** generates a hash chain **526** included in an audit record **522** of all uses of the Access Signature Private Key **514** to sign access Payloads **318.** Another embodiment of this was described above, in which the Access Protected Application **512** in the External Access Party Device **500** generates a hash chain **626** and decrypted messages **618** included in an audit record **622** of all uses of an Escrow Agent Private Key **516** to decrypt messages. This includes auditing of any duplication of the Private Keys **514, 516** or delegation of the rights of the Access Signature Private Key **514** to another key, and allows such duplication or delegation only to other Access Protected Applications **512, 712** that are audited.

The roles of the auditor as described in this application can be duplicated so that multiple auditors can be required for any of the described roles. Also, the different roles of the auditor can be split among multiple auditors or multiple groups of auditors.

The above description is included to illustrate the operation of preferred embodiments, and is not meant to limit the scope of the invention. The scope of the invention is to be limited only by the following claims. From the above description, many variations will be apparent to one skilled in the art that would yet be encompassed by the scope of the present invention as defined in the following claims.

## Claims

1. A computing device (1) operated by a user of the computing device (1), said computing device (1) comprising:
an access control module (330) configured to verify a digital signature, using an access verification key (335), on a request (318) to execute an authorized external access payload (339) on the computing device (1) by an authorized external access entity (500), where the authorized external access entity (500) is a different entity than the user and is external to the computing device (1);
the access control module (330) further configured to store information (337) regarding the authorized external access payload (339);
an output module (336) executing on the computer device (1) and configured to provide the stored information (337) regarding the authorized external access payload (339) to a main partition (205) of the computing device (1);
an authorized access unlock module (368) configured to unlock the computing device (1) when the computing device (1) is in a locked state and when a request to unlock the computing device (1) contained by the authorized external access payload (339) is received by the authorized access unlock module (368), wherein the unlocking gives the authorized external access entity (500) access to the main partition (205) of the computing device (1).

2. The computing device of claim 1, wherein the digital signature (318) verified using the access verification key (335) is generated externally to the computing device (1).

3. The computing device of claim 1 or 2, wherein the storing of the information (337) regarding the authorized external access payload (339) is performed after the passage of some specified time.

4. A method for allowing an authorized external access entity (500) to execute an authorized external access payload (339) on a computing device (1) operated by a user of the computing device (1), said method comprising the steps of:
verifying in an access control module (330) of the computing device (1), using an access verification key (335) a digital signature, on a request by an authorized external access entity (500) to execute an authorized external access payload (339) on the computing device (1), wherein the authorized external access entity (500) is a different entity than the user and is external to the computing device (1);
storing in the access control module (330) information (337) regarding the authorized external access payload (339);
providing, by an output module (336) executing on the computer device (1), the stored information (337) regarding the authorized external access payload (339) to a main partition 205 of the computing device (1);
unlocking, by an authorized access unlock module (368) of the computing device (1), the computing device (1) when the computing device (1) is in a locked state and when a request to unlock the computing device (1) contained by the authorized external access payload (339) is received by the authorized access unlock module (368), wherein the unlocking gives the authorized external access entity (500) access to the main partition (205) of the computing device (1).

5. The method of claim 4, wherein the digital signature (318) verified using the access verification key (335) is generated externally to the computing device (1).

6. The method of claim 4 or 5, wherein storing in the access control module (330) information (337) regarding the authorized external access payload (339) is performed after the passage of some specified time.

## Patentansprüche

1. Computergerät (1), das von einem Benutzer des Computergeräts (1) bedient wird, wobei das Computergerät (1) aufweist:
ein Zugriffskontrollmodul (330), das so konfiguriert ist, dass es unter Verwendung eines Zugriffsverifizierungsschlüssels (335) bei einer Anfrage (318) zur Ausführung einer autorisierten externen Zugriffsnutzlast (339) auf dem Computergerät (1) durch eine autorisierte externe Zugriffseinheit (500) eine digitale Signatur verifiziert, wobei die autorisierte externe Zugriffseinheit (500) eine andere Einheit als der Benutzer ist und sich außerhalb des Computergeräts (1) befindet;
wobei das Zugriffskontrollmodul (330) ferner so konfiguriert ist, dass es Informationen (337) bezüglich der autorisierten externen Zugriffsnutzlast (339) speichert;
ein Ausgabemodul (336), das auf dem Computergerät (1) ausgeführt wird und konfiguriert ist, um die gespeicherten Informationen (337) bezüglich der autorisierten externen Zugriffsnutzlast (339) an eine Hauptpartition (205) des Computergeräts (1) zu liefern;
ein Freigabemodul (368) für autorisierten Zugriff, das so konfiguriert ist, dass es das Computergerät (1) entsperrt, wenn sich das Computergerät (1) in einem gesperrten Zustand befindet und wenn eine Anfrage zum Entsperren des Computergeräts (1), die in der autorisierten externen Zugriffsnutzlast (339) enthalten ist, von dem Freigabemodul (368) für autorisierten Zugriff empfangen wird, wobei das Entsperren der autorisierten externen Zugriffseinheit (500) Zugriff auf die Hauptpartition (205) des Computergeräts (1) gewährt.

2. Computergerät nach Anspruch 1, wobei die digitale Signatur (318), die unter Verwendung des Zugriffsverifizierungsschlüssels (335) verifiziert wird, außerhalb des Computergeräts (1) erzeugt wird.

3. Computergerät nach Anspruch 1 oder 2, wobei das Speichern der Informationen (337) bezüglich der autorisierten externen Zugriffsnutzlast (339) nach Ablauf einer bestimmten Zeit erfolgt.

4. Verfahren, um einer autorisierten externen Zugriffseinheit (500) zu ermöglichen, eine autorisierte externe Zugriffsnutzlast (339) auf einem Computergerät (1), das von einem Benutzer des Computergeräts (1) betrieben wird, auszuführen, wobei das Verfahren die folgenden Schritte aufweist:
Verifizieren in einem Zugriffskontrollmodul (330) des Computergeräts (1), unter Verwendung eines Zugriffsverifizierungsschlüssels (335), einer digitalen Signatur, auf eine Anfrage einer autorisierten externen Zugriffseinheit (500) zur Ausführung einer autorisierten externen Zugriffsnutzlast (339) auf dem Computergerät (1), wobei die autorisierte externe Zugriffseinheit (500) eine andere Einheit als der Benutzer ist und sich außerhalb des Computergeräts (1) befindet;
Speichern von Informationen (337) bezüglich der autorisierten externen Zugriffsnutzlast (339) im Zugriffskontrollmodul (330);
Bereitstellen der gespeicherten Informationen (337) bezüglich der autorisierten externen Zugriffsnutzlast (339) durch ein auf dem Computergerät (1) ausgeführtes Ausgabemodul (336) an eine Hauptpartition 205 des Computergeräts (1);
Entsperren des Computergeräts (1) durch ein Freigabemodul (368) für autorisierten Zugriff des Computergeräts (1), wenn sich das Computergerät (1) in einem gesperrten Zustand befindet und wenn eine Anfrage zum Entsperren des Computergeräts (1), die in der autorisierten externen Zugriffsnutzlast (339) enthalten ist, von dem Freigabemodul (368) für autorisierten Zugriff (368) empfangen wird, wobei das Entsperren der autorisierten externen Zugriffseinheit (500) Zugriff auf die Hauptpartition (205) des Computergeräts (1) gewährt.

5. Verfahren nach Anspruch 4, wobei die unter Verwendung des Zugriffsverifizierungsschlüssels (335) verifizierte digitale Signatur (318) außerhalb des Computergeräts (1) erzeugt wird.

6. Verfahren nach Anspruch 4 oder 5, wobei das Speichern von Informationen (337) bezüglich der autorisierten externen Zugriffsnutzlast (339) im Zugriffskontrollmodul (330) nach Ablauf einer bestimmten Zeit erfolgt.

## Revendications

1. Dispositif informatique (1) exploité par un utilisateur du dispositif informatique (1), ledit dispositif informatique (1) comprenant :
un module de contrôle d'accès (330) configuré pour vérifier une signature numérique, en utilisant une clé de vérification d'accès (335), suite à une demande (318) pour exécuter une charge utile d'accès externe autorisé (339) sur le dispositif informatique (1) au moyen d'une entité d'accès externe autorisé (500), où l'entité d'accès externe autorisé (500) est une entité différente de l'utilisateur et est externe au dispositif informatique (1) ;
le module de contrôle d'accès (330) est en outre configuré pour stocker des informations (337) concernant la charge utile d'accès externe autorisé (339) ;
un module de sortie (336) exécuté sur le dispositif informatique (1) et configuré pour fournir les informations stockées (337) concernant la charge utile d'accès externe autorisé (339) à une partition principale (205) du dispositif informatique (1) ; et
un module de déverrouillage d'accès autorisé (368) configuré pour déverrouiller le dispositif informatique (1) lorsque le dispositif informatique (1) est dans un état verrouillé et lorsqu'une demande pour déverrouiller le dispositif informatique (1) contenue par la charge utile d'accès externe autorisé (339) est reçue par le module de déverrouillage d'accès autorisé (368), dans lequel le déverrouillage donne à l'entité d'accès externe autorisé (500) accès à la partition principale (205) du dispositif informatique (1).

2. Dispositif informatique selon la revendication 1, dans lequel la signature numérique (318) vérifiée en utilisant la clé de vérification d'accès (335) est générée de manière externe au dispositif informatique (1).

3. Dispositif informatique selon la revendication 1 ou 2, dans lequel le stockage des informations (337) concernant la charge utile d'accès externe autorisé (339) est effectué après l'écoulement d'un certain temps spécifié.

4. Procédé pour permettre à une entité d'accès externe autorisé (500) d'exécuter une charge utile d'accès externe autorisé (339) sur un dispositif informatique (1) exploité par un utilisateur du dispositif informatique (1), ledit procédé comprenant les étapes consistant à :
vérifier, dans un module de contrôle d'accès (330) du dispositif informatique (1), une signature numérique en utilisant une clé de vérification d'accès (335), suite à une demande par une entité d'accès externe autorisé (500) pour exécuter une charge utile d'accès externe autorisé (339) sur le dispositif informatique (1), dans lequel l'entité d'accès externe autorisé (500) est une entité différente de l'utilisateur et est externe au dispositif informatique (1) ;
stocker, dans le module de contrôle d'accès (330), des informations (337) concernant la charge utile d'accès externe autorisé (339) ;
fournir, au moyen d'un module de sortie (336) exécuté sur le dispositif informatique (1), les informations stockées (337) concernant la charge utile d'accès externe autorisé (339) à une partition principale (205) du dispositif informatique (1) ; et
déverrouiller, au moyen d'un module de déverrouillage d'accès autorisé (368) du dispositif informatique (1), le dispositif informatique (1) lorsque le dispositif informatique (1) est dans un état verrouillé et lorsqu'une demande pour déverrouiller le dispositif informatique (1) contenue par la charge utile d'accès externe autorisé (339) est reçue par le module de déverrouillage d'accès autorisé (368), dans lequel le déverrouillage donne à l'entité d'accès externe autorisé (500) accès à la partition principale (205) du dispositif informatique (1).

5. Procédé selon la revendication 4, dans lequel la signature numérique (318) vérifiée en utilisant la clé de vérification d'accès (335) est générée de manière externe au dispositif informatique (1).

6. Procédé selon la revendication 4 ou 5, dans lequel le stockage dans le module de contrôle d'accès (330) des informations (337) concernant la charge utile d'accès externe autorisé (339) est effectué après l'écoulement d'un certain temps spécifié.
